# EUROPEAN PATENT APPLICATION

(11) **EP 4 625 618 A1**
(43) Date of publication of application: **01.10.2025**
(21) Application number: 25166057.7
(22) Date of filing: 25.03.2025
(51) Int. Cl.: H01M 10/613, H01M 10/6556, H01M 10/6568, H01M 50/204, H01M 50/244, H01M 50/289, H01M 50/291, H01M 10/658, H01M 50/209

(54) **CTP BATTERY BOX AND CTP BATTERY SYSTEM**

(30) Priority: 26.03.2024 CN 202420597568 U; 26.03.2024 CN 202410352390
(71) Applicant: Eve Energy Co., Ltd., Huizhou, Guangdong 516006 (CN)
(72) Inventor: JIAN, Song, Huizhou, Guangdong, 516006 (CN); FU, Junru, Huizhou, Guangdong, 516006 (CN); ZHAO, Hengxi, Huizhou, Guangdong, 516006 (CN); ZHONG, Jingxiong, Huizhou, Guangdong, 516006 (CN)
(74) Representative: Herrero & Asociados, S.L.

(57) **Abstract**

A CTP battery box includes: a bottom plate and a plurality of side plates. The plurality of side plates are connected to the bottom plate. Adjacent side plates of the plurality of side plates are connected to each other to form a mounting space. A side of the bottom plate near the mounting space defines a plurality of adhesive slots. An insulating layer is arranged to cover the plurality of adhesive slots. The insulating layer defines a plurality of through holes. Each of the plurality of through holes matches a respective one of the plurality of adhesive slots. An adhesive member is arranged in each of the plurality of adhesive slots and passes through a respective one of the plurality of through holes. The insulating layer isolates the bottom plate from a plurality of cells; the adhesive member is configured to adhere the plurality of cells.

## Description

### TECHNICAL FIELD

Embodiments of the present disclosure relate to the technical field of batteries, and more specifically, to a CTP battery box and a CTP battery system.

### BACKGROUND

A CTP battery system is configured as a module-less structure, where bottoms of batteries are directly fixed to a battery box body via adhesive, and cells are directly bonded to a bottom plate (or a side plate) of the battery box body. In order to improve insulation performance of the cells, an insulating film is arranged to wrap a periphery of each cell. The insulating film (blue film) may be made of a roll material that is similar to a tape in structure. One surface of the insulating film is adhesive to be stick to a cell casing, and the other surface of the insulating film may be arranged with a certain amount of silicone oil, such that the insulating film may be peeled off from the roll material easily.

A cell that is fully wrapped by the insulating film may not be easily fixed to the battery box body due to presence of the silicone oil on the surface. When a battery pack is subjected to an impact, insufficient bonding strength between the cells and the battery box body may cause the cells to be detached off from the battery box body, leading to battery module failure. When the cells are partially wrapped, for example, the insulating film is not arranged on bottoms of the cells and is arranged to wrap only peripheries of the cells, insulation performance between the cells and the battery box body may be decreased, and insulation requirements cannot be met.

### SUMMARY

In a first aspect, a CTP battery box is provided and includes: a bottom plate and a plurality of side plates. The plurality of side plates are connected to the bottom plate. Adjacent side plates of the plurality of side plates are connected to each other to form a mounting space. A side of the bottom plate near the mounting space defines a plurality of adhesive slots. An insulating layer is arranged to cover the plurality of adhesive slots. The insulating layer defines a plurality of through holes. Each of the plurality of through holes is aligned with and is communicated with a respective one of the plurality of adhesive slots. An adhesive member is arranged in each of the plurality of adhesive slots and passes through a respective one of the plurality of through holes. The insulating layer isolates the bottom plate from a plurality of cells; the adhesive member is configured to adhere the plurality of cells, and the adhesive member is made of an insulating material.

In a second aspect, a CTP battery system is provided and includes: the CTP battery box in the first aspect; and a plurality of cells. Each of the plurality of cells has a side surface and a bottom surface, the side surface is wrapped by an insulating film, the adhesive member adheres the plurality of cells to the plurality of adhesive slots. The bottom surface of each of the plurality of cells abuts against the insulating layer; or both the bottom surface and the side surface of the each of the plurality of cells abut against the insulating layer.

According to the CTP battery box of the present disclosure, an adhesive slot is defined in the bottom plate, and an adhesive member is received in the adhesive slot. The cell is bonded to the bottom plate via the adhesive member. In this way, secured connection between the cell and the bottom plate is ensured. In order to improve insulation performance between the cell and the bottom plate, an insulating layer is arranged on the bottom plate, the insulating layer defines a through hole matching the adhesive slot. The adhesive member passes through the through hole to be connected to the cell. The cell abuts against the insulating layer and does not directly contact the bottom plate. The adhesive member adheres the cell to the bottom plate, ensuring the cell to be fixed reliably. The adhesive member passes through the hole, allowing the cell to abut against the bottom plate. In this way, while the cell is fixed, the insulation performance between the cell and the battery box body is ensured. The adhesive member has certain insulation performance. When the cell is placed in a mounting space, a surface of the cell in contact with the insulating layer does not need to be wrapped by the insulating film. The insulating layer on the bottom plate isolates the cell from the bottom plate. An exposed portion of the cell is adhered to the bottom plate through the adhesive member, ensuring ideal insulation between the cell and the bottom plate. Furthermore, the cell may be securely fixed to the bottom plate. Overall insulation performance and vibration resistance of the battery box are improved, ensuring the battery box to be used safely.

According to the CTP battery system of the present disclosure, sides of the cell are fully or partially wrapped by the insulating film, and the bottom of the cell is not insulated. When the sides of the cell are fully wrapped, the bottom of the cell abuts against the insulating layer, and the adhesive member is adhered to the cell and the adhesive slot. When the sides of the cell are partially wrapped by the insulating film, the bottom and any unwrapped side of the cell abut against the insulating layer, and the adhesive member adheres the cell and the adhesive slot. The insulating film and the insulating layer cooperatively form insulation for the cell, preventing the cell from contacting the bottom plate. The adhesive member fixes the cell, ensuring secured connection between the cell and the battery box, preventing the cell from being detached from the bottom plate due to external forces. For the CTP battery system of the present disclosure, a cell structure inside the battery box is stable, the cell is securely connected to the battery box, insulation for the cell is ideal, such that the CTP battery system has ideal vibration resistance and insulation performance. By defining the adhesive slot and arranging the insulating layer on the bottom plate and partially wrapping the cell with the insulating film, when the cell is fixed on the bottom plate, the unwrapped portion of the cell abuts against the insulating layer, the insulating film and the insulating layer cooperatively form insulation for the cell. By defining the through hole in the insulating layer that is matching and communicating with the adhesive slot, the adhesive member is arranged in the adhesive slot and passes through the through hole to be adhered to the unwrapped portion of the cell. In this way, the cell and the bottom plate are securely connected to each other. The CTP battery system of the present disclosure has ideal insulation performance and ideal cell adhering strength, such that the CTP battery system may be used more safely and more reliably, providing ideal economic and practical values.

### BRIEF DESCRIPTION OF THE DRAWINGS

FIG. 1 is a structural schematic view of a CTP battery box according to an embodiment of the present disclosure.
FIG. 2 is a structural schematic view of a bottom plate and an insulating film of the CTP battery box according to an embodiment of the present disclosure.
FIG. 3 is a cross-sectional view of an insulating layer in Embodiment 1 of the present disclosure.
FIG. 4 is a cross-sectional view of the bottom plate in Embodiment 1 of the present disclosure.
FIG. 5 is a cross-sectional view of the bottom plate in an in-use state in Embodiment 1 of the present disclosure.
FIG. 6 is a cross-sectional view of the bottom plate in Embodiment 2 of the present disclosure.
FIG. 7 is a cross-sectional view of the bottom plate in an in-use state in Embodiment 2 of the present disclosure.
FIG. 8 is a cross-sectional view of the bottom plate in Embodiment 4 of the present disclosure.
FIG. 9 is a cross-sectional view of the bottom plate in an in-use state in Embodiment 4 of the present disclosure.
FIG. 10 is a cross-sectional view of the bottom plate in an in-use state in Embodiment 5 of the present disclosure.
FIG. 11 is a structural schematic view of an insulating film in Embodiment 6 of the present disclosure.

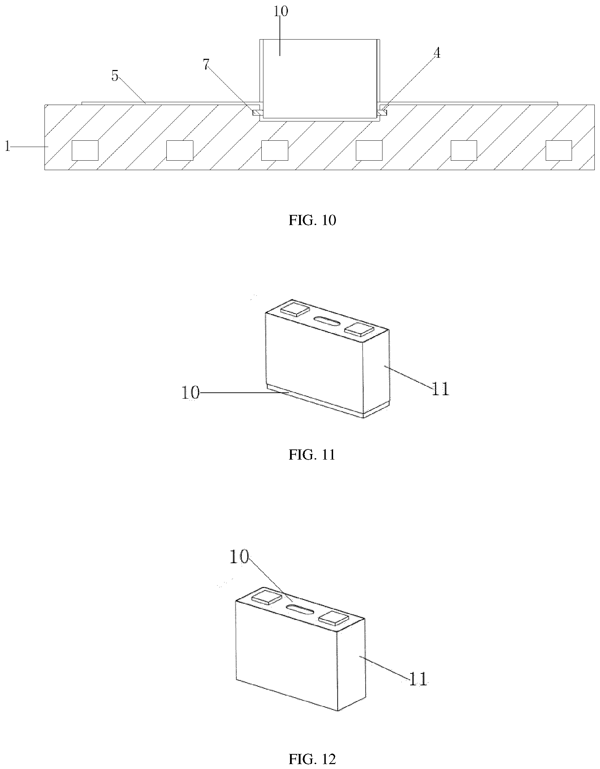

FIG. 11 12 is a structural schematic view of an insulating film in Embodiment 7 of the present disclosure.

Reference numerals in the drawings:
1 - bottom plate, 2 - side plate, 3 - mounting space, 4 - adhesive slot, 5 - insulating layer, 6 - through hole, 7 - adhesive member, 8 - mounting slot, 9 - liquid cooling channel, 10 - cell, 11 - insulating film, 51 - protruding portion.

### DETAILED DESCRIPTIONS

### Embodiment 1

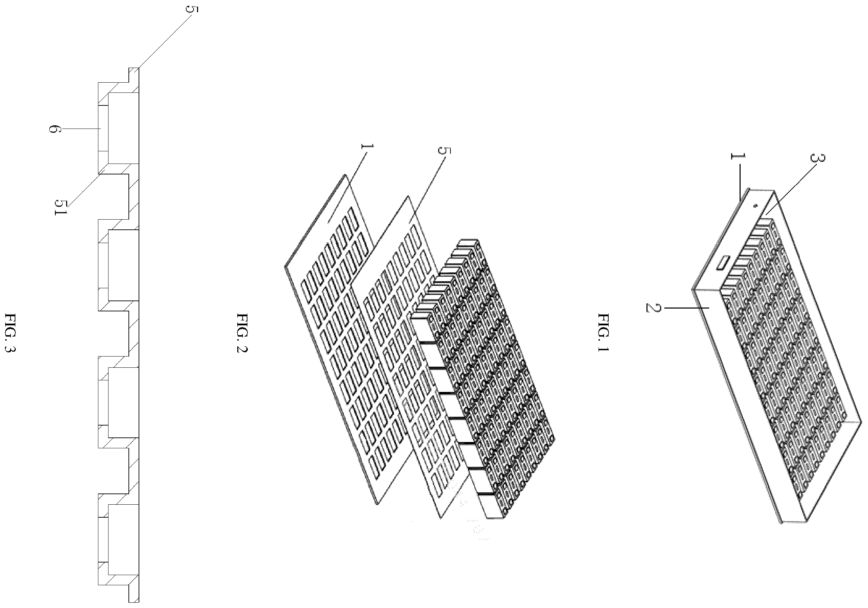

As shown in FIGS. 1-5, a CTP battery box includes a bottom plate 1 and a plurality of side plates 2. The plurality of side plates 2 are connected to the bottom plate 1. Adjacent side plates 2 are connected to each other to form a mounting space 3. A side of the bottom plate 1 near the mounting space 3 defines an adhesive slot 4. An insulating layer 5 is arranged to cover the adhesive slot 4. The insulating layer 5 defines a through hole 6 matching a slot opening of the adhesive slot 4. An adhesive member 7 is received in the adhesive slot 4. The adhesive member 7 passes through the through hole 6. The insulating layer 5 isolates the bottom plate 1 from a cell 10. The adhesive member 7 is configured to be adhered to the cell 10 and is made of an insulating material.

Specifically, the bottom plate 1 defines a mounting slot 8. The cell 10 may be received and limited in the mounting slot 8. The adhesive slot 4 is defined a slot wall of the mounting slot 8. The insulating layer 5 is at least partially arranged in the mounting slot 8. The mounting slot 8 can limit a position of the cell 10, preventing the cell 10 from being horizontally displaced, such that the cell 10 is held in position. In this way, fixation of the cell 10 to the bottom plate 1 is improved, vibration resistance of the battery box is improved.

Specifically, the battery box is a rectangular box. The bottom plate 1 and a top plate of the battery box are rectangular. Four side plates 2 are fitted to four sides of the bottom plate 1 respectively. One side of each of the four side plates 2 is connected to a respective one of the four sides of the bottom plate 1. Adjacent side plates 2 are connected to each other. The four side plates 2 and the bottom plate 1 cooperatively form the mounting space 3 for mounting the cell 10. Four sides of the rectangular top plate are detachably connected to the four side plates 2 respectively, facilitating the cell 10 to be mounted in the mounting space 3. Positions where the bottom plate 1 and the side plates 2 are connected to each other are sealed. Positions where the adjacent side plates 2 are connected to each other are sealed. In this way, sealing performance of the battery box is ensured, and the cell 10 inside the battery box is safe.

Specifically, the insulating layer 5 is a polypropylene film having a shape matching a shape of the bottom plate 1. The polypropylene film is a film structure having ideal insulation performance. One side of the polypropylene film is configured as an adhesive face, and the polypropylene film is adhered to the bottom plate 1 via the adhesive face. In this way, the entire surface of the bottom plate 1 facing the mounting space 3 is fully covered by the polypropylene film, providing better isolation for the cell 10 and ensuring insulation performance between the cell 10 and the bottom plate 1. The polypropylene film is arranged with at least one protruding portion 51. An arrangement of the at least one protruding portion 51 on the polypropylene film matches an arrangement of the mounting slot 8 on the bottom plate 1. When the polypropylene film is attached to the bottom plate 1, each of the at least one protruding portion 51 is embedded into the mounting slot 8. A shape of each of the at least one protruding portion 51 matches a shape of the mounting slot 8, and the at least one protruding portion 51 is attached to a slot inner wall of the mounting slot 8. Each of the at least one protruding portion 51 defines the through hole 6. The adhesive member 7 is received in the through hole 6 to connect the bottom plate 1 to the cell 10, ensuring adhesive strength between the cell 10 and the bottom plate 1.

Specifically, a plurality of mounting slots 8 are defined in the bottom plate 1 and are arranged in an array, such that a plurality of cells 10 are arranged on the bottom plate 1 and are arranged in an array. A spacing between adjacent mounting slots 8 controls a spacing between adjacent cells 10, ensuring each cell 10 is disposed at a correct position on the bottom plate 1, preventing the cell from being compressed, and ensuring ideal heat dissipation.

Specifically, the adhesive slot 4 is defined in a slot bottom of each mounting slot 8. The through hole 6 defined in each protruding portion 51 is aligned with the slot opening of the adhesive slot 4. The adhesive slot 4 is located at a center of the slot bottom. A shape of the slot opening of the adhesive slot 4 matches a shape of a slot opening of the mounting slot. In this way, it is ensured that the adhesive member 7 is adhered to a center of the bottom of the cell 10, such that the cell 10 can be properly connected to the bottom plate 1 when being subjected to forces from any direction, preventing the cell 10 from falling out of the mounting slot 8, and improving firmness of the connection between the cell 10 and the bottom plate 1.

Specifically, an area of an opening of the through hole 6 is smaller than an area of the slot bottom of the mounting slot 8. When the cell 10 is received in the mounting slot 8, the polypropylene film is disposed between the cell 10 and the slot bottom of the mounting slot 8. The adhesive member 7 connects the bottom of the cell 10 to the slot bottom of the mounting slot 8, the area of the opening of the through hole 6 is smaller than the area slot bottom of the mounting slot 8 and is smaller than the area of the bottom of the cell 10. The area of the opening of the through hole 6 is at least half of the area of the bottom of the cell 10. When the cell 10 is received in the mounting slot 8, edges of the bottom of the cell 10 contact the polypropylene film, the polypropylene film isolates the cell 10 from the bottom plate 1. As the area of the opening of the through hole 6 increases, adhesion between the cell 10 and the adhesive slot 4 is greater.

Specifically, the adhesive member 7 is a structural adhesive made of epoxy resin. The structural adhesive is poured into the adhesive slot 4. The structural adhesive passes through the through hole 6 to adhere the cell 10 to the adhesive slot 4. After the structural adhesive solidifies, the structural adhesive keeps the bottom of the cell 10 to abut against the polypropylene film and to fix and limit the cell 10 in the mounting slot 8. The mounting slot 8 limits the horizontal displacement of the cell 10, and the structural adhesive limits vertical displacement of the cell 10. In this way, the cell 10 may not fall out of the mounting slot 8 easily, and the cell 10 may not move in the mounting space 3, such that the vibration resistance of the battery box is improved.

Specifically, the bottom plate 1 of the battery box defines a plurality of liquid cooling channels 9. Each of the plurality of liquid cooling channels 9 penetrates the bottom plate 1 and extends along a length direction or a width direction of the bottom plate 1. The liquid cooling channel 9 does not interfere with the mounting slot 8, ensuring the mounting space 3 is a sealed space and preventing a cooling medium from leaking. A cross section of the liquid cooling channel 9 is rectangular. The plurality of liquid cooling channels 9 are evenly distributed and are arranged at equal intervals on the bottom plate 1, and adjacent liquid cooling channels 9 are parallel to each other. In this way, heat of any position of the bottom plate 1 can be dissipated through at least one of the plurality of liquid cooling channels 9. The cooling medium is input from one end of the liquid cooling channel 9 and is output out of the liquid cooling channel 9 at the other end. Flowing of the cooling medium dissipates away the heat generated by the cells 10 in the mounting space 3, such that the battery box maintains at a stable operating temperature.

Specifically, a thickness of the polypropylene film is 0.15 mm, and a thickness of the structural adhesive is 2 mm. The 2 mm thickness of the structural adhesive ensures secure adhesion between the cell and the bottom plate and ensures insulation performance between the cell and the bottom plate. As long as the adhesion performance is ensured, the structural adhesive may be thinner than 2 mm. As the structural adhesive is thinner, an influence on the insulation performance is less. The polypropylene film may be thinner as long as the insulation performance is ensured. As the polypropylene film is thinner, more materials for production may be saved. In an embodiment, the thickness of the polypropylene film may be 0.1 mm, and the thickness of the structural adhesive may be 1mm.

In the present embodiment, the bottom plate 1 and the side plates 2 are configured as an integral and one-piece structure, ensuring sealing performance of the mounting space 3 and enabling the cells 10 to be mounted therein more safely.

In the present embodiment, the insulating layer 5 may alternatively be made of polycarbonate or polyester resin.

In the present embodiment, the mounting slot 8 may be rectangular, matching the shape of the cell 10, and the adhesive slot 4 may also be rectangular.

When the CTP battery box of the present embodiment is being in use, the structural adhesive is injected into the adhesive slot 4 through the through hole 6, and the cell 10 is placed subsequently. The cell 10 is pressed down until the bottom of the cell 10 abuts against the polypropylene film, enabling the structural adhesive to be adhered to the bottom of the cell 10 through the through hole 6, and then the structural adhesive is enabled to solidify naturally. In this way, the cell 10 is fixed in the mounting slot 8. The above process is repeated until all mounting slots 8 on the bottom plate 1 are filled with cells 10. After mounting, the top plate is connected to the side plates 2. By defining the mounting slot 8 in the bottom plate 1, the bottom of the cell 10 is fitted to the mounting slot 8. When the cell 10 is mounted in the mounting slot 8, the cell 10 is held in position on the bottom plate 1, such that the position of the cell 10 is limited, connection strength between the cell 10 and the bottom plate 1 is improved. The insulating layer 5 is attached to the slot wall of the mounting slot 8 to improve the insulation performance between the cell 10 and the battery box. The through hole 6 is defined in the insulating layer 5, and the adhesive member 7 is arranged in and passes through the through hole 6, such that one end of the adhesive member 7 is connected to the cell 10, and the other end of the adhesive member 7 is connected to the bottom plate 1, and therefore, the cell 10 is securely fixed in the battery box.

For the CTP battery box of the present embodiment, the cells 10 in the battery box are isolated from the bottom plate 1 by the insulating layer 5. The mounting slots 8 defined in the bottom plate 1 limit positions of the cells 10. Furthermore, the adhesive members 7 in the through holes 6 adhere the bottom plate 1 to the cells 10, ensuring the insulation performance of the battery box and enabling the cells 10 to be firmly fixed in the battery box.

### Embodiment 2

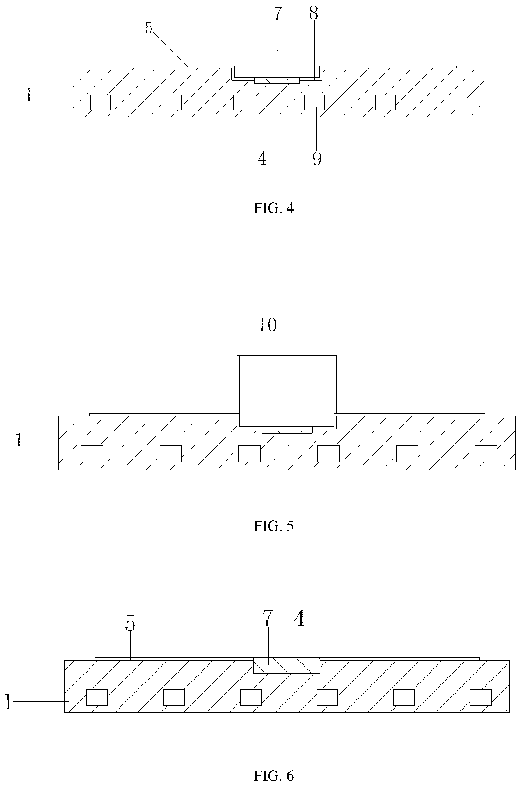

As shown in FIGS. 6-7, the CTP battery box has a structure substantially similar to that of Embodiment 1. In the present embodiment, the bottom plate 1 does not define any mounting slot 8.

Specifically, the insulating layer 5 is not arranged with the protruding portion 51, and the insulating layer 5 is arranged on the bottom plate 1.

Specifically, the insulating layer 5 defines a plurality of through holes 6 that match a plurality of adhesive slots 4. When the insulating layer 5 is arranged on the bottom plate 1, an opening of each of the plurality of through holes 6 aligns with a slot opening of a respective one of the plurality of adhesive slots 4.

When the CTP battery box of the present embodiment is in use, the bottom of each cell 10 is aligned with the respective adhesive slot 4, such that the bottom of the cell 10 covers the adhesive slot 4. Edges of the bottom of the cell 10 abut against the insulating layer 5, and a middle portion of the cell 10 is connected to the adhesive member 7, such that the cell 10 is fixed to the bottom plate 1.

For the CTP battery box of the present embodiment, by defining the adhesive slot 4 in the bottom plate 1 and arranging the adhesive member 7 in the adhesive slot 4, the adhesive member 7 is adhered to the cell 10, such that the cell 10 and the bottom plate 1 are fixedly connected to each other, ensuring secure connection between the cell 10 and the bottom plate 1. In order to improve the insulation performance between the cell 10 and the bottom plate 1, the insulating layer 5 is arranged on the bottom plate 1. The insulating layer 5 defines the through hole 6 matching the adhesive slot 4, and the adhesive member 7 passes through the through hole 6 to connect the cell 10 with the adhesive slot 4. The cell 10 abuts against the insulating layer 5 without directly contacting the bottom plate 1. The adhesive member 7 adheres the cell 10 to the bottom plate 1, ensuring the cell 10 to be securely fixed. The adhesive member 7 passes through the through hole 6, enabling the cell 10 to abut against the bottom plate 1. In this way, while the cell is fixed, the insulation performance between the cell 10 and the battery box is ensured. The adhesive member 7 is a structural component having certain insulation performance. When the cell 10 is received in the mounting space 3, a surface of the cell 10 abutting against the insulating layer 5 does not need to be wrapped by the insulating layer 5. The insulating layer 5 on the bottom plate 1 isolates the cell 10 from the bottom plate 1. The exposed portion of the cell 10 is adhered to the bottom plate 1 through the adhesive member 7, ensuring ideal insulation performance and secure connection between the cell and the bottom plate 1. In this way, the overall insulation and the vibration resistance of the battery box are improved, and the battery box is ensured to be used safely.

### Embodiment 3

The CTP battery box of the present embodiment has a structure substantially similar to that of Embodiment 1. In the present embodiment, the bottom plate 1 of the CTP battery box is a circular plate, and the side walls of the CTP battery box is a cylindrical member. The circular plate and the cylindrical member are adapted to each other.

Specifically, the mounting slot 8 and the adhesive slot 4 are cylindrical slots, and a depth of the adhesive slot 4 is 1 mm.

The CTP battery box of the present embodiment is configured as a cylindrical body.

In some embodiments, a battery box body may alternatively be configured in other forms that are capable of receiving the cells 10. The shape of the mounting slot 8 and the shape of the adhesive slot 4 are cylindrical, adapted for mounting and fixing cylindrical cells 10. In some embodiments, the shape of the mounting slot 8 and the shape of the adhesive slot 4 may be changed according to the shape of the cell 10, facilitating the cell 10 to be mounted and fixed easily.

### Embodiment 4

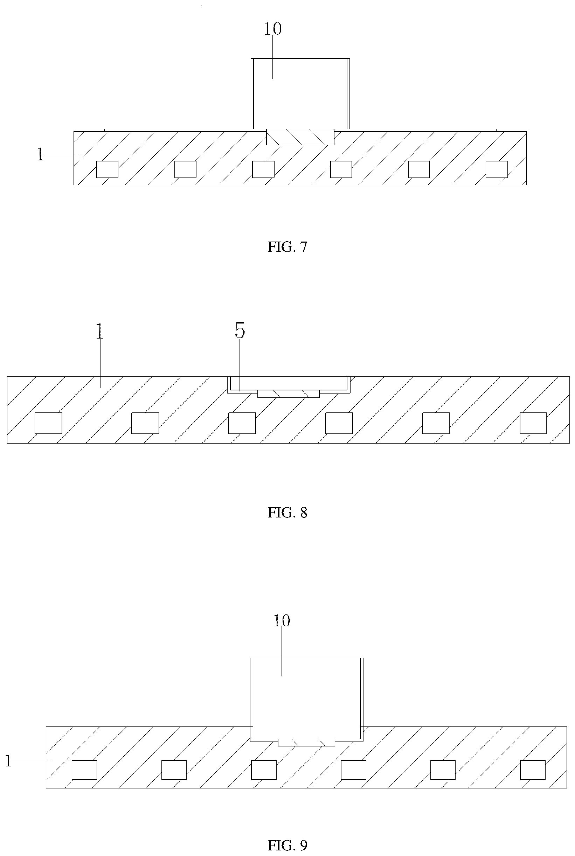

As shown in FIGS. 8-9, the CTP battery box has a structure substantially similar to that of Embodiment 1. In the present embodiment, the insulating layer 5 is a concave film having a shape being the same as the shape of the mounting slot 8.

Specifically, the concave film is attached to only a slot bottom and a slot side wall of the mounting slot 8.

Specifically, each mounting slot 8 is arranged with one concave film independently.

For the CTP battery box of the present embodiment, by independently arranging one concave film in each mounting slot 8, while the insulation performance of the cell 10 is ensured, production materials are saved.

### Embodiment 5

As shown in FIG. 10, the CTP battery box has a structure substantially similar to that of Embodiment 1. In the present embodiment, the adhesive slot 4 is defined in the slot side wall of the mounting slot 8.

Specifically, four adhesive slots 4 are defined in one mounting slot 8, each of four slot side walls of the rectangular mounting slot 8 defines a respective one of the four adhesive slots 4.

For the CTP battery box of the present embodiment, the adhesive member 7 is adhered to side walls of the cell 10 to fix the cell 10. All four sides of the cell 10 are adhered, ensuring that the cell 10 is firmly fixed in the mounting slot 8.

### Embodiment 6

As shown in FIG. 11, the CTP battery system includes the CTP battery box of the Embodiment 1 and the cells 10. Each cell 10 includes a side surface and a bottom surface. The side surface of the cell 10 is wrapped with the insulating film 11, and the adhesive member 7 adheres the cell 10 to the adhesive slot 4. The bottom surface of the cell 10 abuts against the insulating layer 5, or both the bottom surface and the side surface of the cell 10 abuts against the insulating layer 5.

Specifically, the bottom plate 1 defines the mounting slot 8, and the side surface of the cell 10 is partially wrapped by the insulating film 11, leaving a portion of the side surface near the bottom surface to be exposed. When the bottom of the cell 10 is fitted into the mounting slot 8, the insulating film abuts against the insulating layer 5, ensuring that the side surface and the bottom surface of the cell 10 are covered by the insulating layer 5 and the insulating film, such that the insulation performance is ensured.

Specifically, the through hole 6 is located at a center of the bottom surface of the cell, and the area of the opening of the through hole 6 is smaller than the area of the bottom surface of the cell 10. The area of the opening of the through hole 6 is at least half of the area of the bottom surface of the cell 10. The area of the opening of the through hole 6 is smaller than the area of the bottom surface of the cell 10, ensuring that the bottom surface of the cell 10, when being mounted, abuts against the insulating layer 5, and the cell 10 is prevented from directly contacting the bottom plate 1, such that the insulation performance is ensured. As the area of the opening of the through hole 6 increases, an adhesion area between the cell 10 and the structural adhesive is increased, and the adhesion between the cell 10 and the bottom plate 1 is stronger. The area of the opening of the through hole 6 is at least half of the area of the bottom surface of the cell 10, ensuring the adhesion between the cell 10 and the bottom plate 1 to be secure.

For the CTP battery system of the present embodiment, the side surface of the cell 10 is fully or partially wrapped with the insulating film 11, and the bottom surface of the cell 10 is not insulated. When the side surface is fully wrapped, the bottom surface of the cell 10 abuts against the insulating layer 5, and the adhesive member 7 adheres the cell 10 to the adhesive slot 4. When the side surface is partially wrapped by the insulating film 11, the bottom surface and the unwrapped portion of the side surface of the cell 10 abut against the insulating layer 5, and the adhesive member 7 adheres the cell 10 to the adhesive slot 4. The insulating film 11 and the insulating layer 5 cooperatively form insulation for the cell 10. By fixing the cell 10 via adhesion, it is ensured that the cell 10 is firmly connected to the battery box, and the cell 10 may not be easily detached from the bottom plate 1 when being subjected to external forces, such that stability of the cell 10 is improved. The insulating layer 5 and the insulating film 11 isolate the cell 10, preventing direct contact between the cell 10 and the bottom plate 1 of the CTP battery box, ensuring insulation between the cell 10 and the battery box. For the CTP battery system of the present embodiment, the cells inside the battery box has a stable structure, connection between the cells 10 and the battery box is secured, and strong insulation performance of the cells 10 is provided, such that the CTP battery system has both vibration resistance and insulation performance.

### Embodiment 7

As shown in FIG. 12, the CTP battery system includes the CTP battery box of the Embodiment 2 and the cells 10. Each cell 10 includes the side surface and the bottom surface. The side surface of the cell 10 is fully wrapped with the insulating film 11. The adhesive member 7 adheres the cell 10 to the adhesive slot 4. The bottom surface of the cell 10 abuts against the insulating layer 5. Alternatively, both the bottom surface and the side surface of the cell 10 abut against the insulating layer 5.

Specifically, the side surface of the cell 10 is completely wrapped by the insulating film 11, and only the bottom surface of the cell 10 is exposed. When the cell 10 is mounted on the bottom plate 1, the insulating film 11 abuts against the insulating layer 5, so as to ensure the insulation performance of the cell 10.

## Claims

1. A CTP battery box, comprising: a bottom plate (1) and a plurality of side plates (2), wherein the plurality of side plates (2) are connected to the bottom plate (1), and adjacent side plates (2) of the plurality of side plates (2) are connected to each other to form a mounting space (3); a side of the bottom plate (1) near the mounting space (3) defines a plurality of adhesive slots (4); an insulating layer (5) is arranged to cover the plurality of adhesive slots (4); the insulating layer (5) defines a plurality of through holes (6), each of the plurality of through holes (6) is aligned with and is communicated with a respective one of the plurality of adhesive slots (4); an adhesive member (7) is arranged in each of the plurality of adhesive slots (4) and passes through a respective one of the plurality of through holes (6); the insulating layer (5) isolates the bottom plate (1) from a plurality of cells (10); the adhesive member (7) is configured to adhere the plurality of cells (10), and the adhesive member (7) is made of an insulating material.

2. The CTP battery box according to claim 1, wherein the bottom plate (1) defines a plurality of mounting slots (8); each of the plurality of mounting slots (8) is configured to receive and limit a respective one of the plurality of cells (10); each of the plurality of adhesive slots (4) is defined in a respective one of the plurality of mounting slots (8); the insulating layer (5) is arranged in each of the plurality of mounting slots (8).

3. The CTP battery box according to claim 2, wherein each of the plurality of adhesive slots (4) is defined in a slot bottom of the respective one of the plurality of mounting slots (8); an area of an opening of each of the plurality of through holes (6) is smaller than an area of the slot bottom of the respective one of the plurality of mounting slots (8).

4. The CTP battery box according to claim 3, wherein each of the plurality of adhesive slots (4) is located at a middle portion of the slot bottom of the respective one of the plurality of mounting slots (8).

5. The CTP battery box according to claim 2 or 3, wherein the insulating layer (5) comprises a film structure matching the bottom plate (1), the film structure is arranged covering the bottom plate (1); the film structure is arranged with a plurality of protruding portions (51) respectively matching the plurality of mounting slots (8), each of the plurality of protruding portions (51) defines a respective one of the plurality of through holes (6).

6. The CTP battery box according to claim 5, wherein each of the plurality of protruding portions (51) is attached to a slot inner wall of a respective one of the plurality of mounting slots (8).

7. The CTP battery box according to claim 2, wherein each of the plurality of adhesive slots (4) is defined in a slot side wall of the respective one of the plurality of mounting slots (8).

8. The CTP battery box according to any one of claims 1 to 7, wherein the adhesive member (7) is a structural adhesive, and a thickness of the structural adhesive is less than or equal to 2 mm.

9. The CTP battery box according to any one of claims 1 to 8, wherein an adhesive member is arranged on a side of the insulating layer (5) and is adhered to the bottom plate (1), a thickness of the insulating layer (5) is less than or equal to 0.15 mm.

10. The CTP battery box according to any one of claims 1 to 9, wherein the bottom plate (1) defines a plurality of liquid cooling channels (9), and the plurality of liquid cooling channels (9) extends through the bottom plate (1).

11. The CTP battery box according to any one of claims 1 to 10, wherein the insulating layer (5) covers the entire side of the bottom plate (1) facing the mounting space (3).

12. The CTP battery box according to any one of claims 1 to 11, further comprising a top plate, wherein the top plate is fitted to cover an opening of the mounting space (3), and the top plate is detachably connected to the plurality of side plates (2).

13. A CTP battery system, comprising:
the CTP battery box according to claim 12; and
a plurality of cells (10), wherein each of the plurality of cells (10) has a side surface and a bottom surface, the side surface is wrapped by an insulating film (11), the adhesive member (7) adheres the plurality of cells (10) to the plurality of adhesive slots (4);
wherein the bottom surface of each of the plurality of cells (10) abuts against the insulating layer (5); or both the bottom surface and the side surface of the each of the plurality of cells (10) abut against the insulating layer (5).

14. The CTP battery system according to claim 13, wherein the adhesive member (7) is connected to a middle portion of the bottom surface of each of the plurality of cells (10); the area of the opening of each of the plurality of through holes (6) is smaller than an area of the bottom surface of each of the plurality of cells (10); and the area of the opening of each of the plurality of through holes (6) is at least half of the area of the bottom surface of each of the plurality of cells (10).

15. The CTP battery system according to claim 13 or 14, wherein edges of each of the plurality of cells (10) abut against the insulating layer (5).
